# DEMANDE DE BREVET EUROPEEN

(11) **EP 3 937 071 A1**
(43) Date de publication de la demande: **12.01.2022**
(21) Numéro de dépôt: 20305764.1
(22) Date de dépôt: 06.07.2020
(51) Int. Cl.: G06K 9/00

(54) **PROCÉDÉ D'ASSISTANCE AU SUIVI EN TEMPS RÉEL D'AU MOINS UNE PERSONNE SUR DES SÉQUENCES D'IMAGES**

(71) Demandeur: Bull SAS, 78340 Les Clayes-sous-Bois (FR)
(72) Inventeur: PELLETIER, Benoît, 38960 SAINT ETIENNE DE CROSSEY (FR); KODJO, Edoh, 38100 GRENOBLE (FR); METGE, Baptiste, 38000 GRENOBLE (FR); DRUILHE, Rémi, 38400 SAINT MARTIN D'HARES (FR); BOUKAMEL-DONNOU, Cécile, 38130 ECHIROLLES (FR); ARNAISE, Nicolas, 38130 ECHIROLLES (FR)
(74) Mandataire: IPAZ

(57) **Abrégé**

L'invention concerne un procédé (100) d'assistance au suivi, en temps réel, d'une personne d'intérêt, mis en œuvre par ordinateur, à partir d'au moins une séquence d'images (104) de ladite personne d'intérêt, dite tracklet de référence, ledit procédé (100) comprenant au moins une itération des étapes suivantes :
- obtention, en temps réel, d'au moins une nouvelle séquence d'images (108), dite nouvelle tracklet, relative à une personne ;
- analyse de ladite nouvelle tracklet (108), comprenant les étapes suivantes réalisées pour au moins une tracklet de référence (104) :
-calcul (112) d'une distance entre une signature de ladite tracklet de référence (104) et une signature de ladite nouvelle tracklet (108),
- lorsque ladite distance est inférieure ou égale à au moins un seuil prédéterminé, filtrage (114,116) automatisée de ladite nouvelle tracklet (108) avec au moins un paramètre relatif à ladite tracklet de référence (104) ; et

-lorsque ladite nouvelle tracklet (108) satisfait ladite étape d'analyse (114,116), validation (117,118) ou non de ladite nouvelle tracklet (108) comme appartenant à ladite personne d'intérêt.

## Description

La présente invention concerne un procédé et un dispositif d'assistance au suivi en temps réel, d'une personne sur des séquences d'images. Elle concerne également un procédé et une installation de suivi en temps réel d'une personne d'intérêt par des caméras.

Le domaine de l'invention est le domaine de la vidéo surveillance de personnes en temps réel, en particulier au sein d'un espace et à partir de flux vidéos fournis par des caméras distribuées dans ledit espace.

### État de la technique

Il existe actuellement des solutions, utilisant des modèles de deep learning, de type « Human détecter », permettant de détecter de manière automatisée une personne dans une image. Plus d'informations peuvent être trouvées sur ce type de modèle de deep learning à la page https://github.com/tensorflow/models/tree/master/research/object détection.

Il existe aussi des solutions, utilisant des modèles de deep learning, de type « Human ReID » permettant de déterminer une signature d'une personne dans une image. Plus d'informations peuvent être trouvées sur ce type de modèle de deep learning à la page https://arxiv.org/abs/1807.09666.

Enfin, on connait aussi des solutions, utilisant des modèles de deep learning, de type « Human parsing » permettant de déterminer des attributs visuels, notamment des attributs relatifs aux couleurs des vêtements portés par une personne apparaissant dans une image ou dans une séquence d'images. Plus d'informations peuvent être trouvées sur ce type de modèle de deep learning à la page https://arxiv.org/abs/1802.02611.

Des solutions existent pour rechercher dans un passé récent, la trajectoire d'une personne d'intérêt à partir d'image mémorisées, mettant en œuvre un ou plusieurs des modèles de deep learning mentionnés ci-dessus. Cependant, il n'existe aucune solution pour le suivi automatisé, et en temps réel, d'une personne à partir de flux vidéo temps réel fournis par une pluralité de caméras de surveillance distribuées dans l'espace.

Or, le nombre caméras de surveillance augmente plus vite que le nombre d'opérateurs humains de la vidéosurveillance, de sorte qu'il devient très difficile, pour les opérateurs humains, de suivre une personne ou un véhicule se déplaçant de caméra en caméra. Si l'opérateur est dérangé, il peut perdre la personne et la retrouver peut-être particulièrement fastidieux. Le suivi de plusieurs personnes, ou véhicules, à la fois est encore plus difficile, voire impossible.

Un but de la présente invention est de remédier à au moins un des inconvénients précités.

Un autre but de la présente invention est de proposer une solution de suivi en temps réel et automatisée d'une personne dans des séquences d'images.

Il est aussi un but de la présente invention de proposer une solution permettant de faciliter le suivi en temps réel, par un opérateur humain, d'une personne d'intérêt dans des séquences d'images.

### Exposé de l'invention

L'invention permet d'atteindre au moins l'un de ces buts par un procédé d'assistance au suivi, en temps réel, d'une personne d'intérêt, mis en œuvre par ordinateur, à partir d'au moins une séquence d'images de ladite personne d'intérêt, dite tracklet de référence, ledit procédé comprenant au moins une itération des étapes suivantes :
- obtention, en temps réel, d'au moins une nouvelle séquence d'images (108), dite nouvelle tracklet, relative à une personne ;
- analyse de ladite nouvelle tracklet, comprenant les étapes suivantes réalisées pour au moins une tracklet de référence :
   - calcul d'une distance entre une signature de ladite tracklet de référence et une signature de ladite nouvelle tracklet,
   - lorsque ladite distance est inférieure ou égale à au moins un seuil prédéterminé, filtrage automatisé de ladite nouvelle tracklet avec au moins un paramètre associé à ladite tracklet de référence, et
- lorsque ladite nouvelle tracklet satisfait ladite étape d'analyse, validation ou non de ladite tracklet comme appartenant à ladite personne d'intérêt.

Ainsi, pour une tracklet de référence dans laquelle apparait une personne d'intérêt, l'invention permet d'identifier, de manière automatisée toute nouvelle tracklet, postérieure à ladite tracklet de référence dans le temps, et sur laquelle apparait ladite personne d'intérêt.

En effet, avec l'invention, l'opérateur humain donne en entrée une ou plusieurs séquences d'images sur laquelle apparait une personne d'intérêt qu'il souhaite suivre en temps réel. À partir de ce moment-là, toutes les nouvelles tracklets obtenues par toutes les caméras sont surveillées et analysées automatiquement. Et lorsqu'une nouvelle tracklet comprend une personne identique ou ressemblant à ladite personne d'intérêt elle est automatiquement détectée, et éventuellement validée. Par conséquent, l'invention permet de réaliser un suivi, ou un tracking, en temps réel d'une personne d'intérêt de manière plus simple pour les opérateurs. L'opérateur fournit moins d'effort pour suivre une personne d'intérêt en temps réel sur des flux vidéos qui sont fournies par plusieurs caméras distribuées dans l'espace, et en particulier lorsque les caméras sont nombreuses.

Dans la présente demande, par « tracklet » on entend une séquence d'images sur lesquelles apparait une personne, et obtenue à partir d'un flux vidéo fourni par une caméra.

Par « nouvelle tracklet », on entend une tracklet obtenue à partir d'une vidéo captée, après la sélection de la tracklet de référence, en temps réel, c'est-à-dire au moment où le procédé selon l'invention est exécuté.

Par « signature » d'une tracklet, on entend une donnée numérique, représentées par des caractères numériques ou alphanumériques, dépendant du contenu de ladite tracklet, et fournit par un modèle prédéterminé.

Chaque tracklet est générée à partir d'un flux vidéo fournie par une caméra. En particulier, chaque nouvelle tracklet est générée à partir d'un flux vidéo temps réel, par exemple un flux vidéo RTSP (pour « Real Time Streaming Protocol » en anglais »), fournie par une caméra, en particulier une caméra de surveillance.

La génération de la tracklet peut être réalisée localement à ladite caméra, ou sur un site distant avec lequel ladite caméra est en communication filaire ou sans fil. Dans ce cas, le flux vidéo temps réel est transmis en temps réel audit site distant qui analyse ledit flux vidéo et en extrait une ou plusieurs tracklets, par des techniques connues, qui seront décrits plus bas.

Suivant une caractéristique nullement limitative, pour une personne d'intérêt, au moins une nouvelle tracklet de référence peut être ajoutée, supprimée ou modifiée, par l'opérateur à tout moment.

Autrement dit, la liste des tracklets de référence prises en compte dans le procédé selon l'invention, et en particulier lors de l'étape d'analyse, peut être mise à jour à tout moment par l'opérateur.

Au moins une tracklet de référence peut être fournie manuellement par l'opérateur.

Alternativement, ou en plus, au moins une tracklet de référence peut être fournie par une recherche préalable dans une base de données mémorisant des tracklets, par exemple pour un passé récent.

Alternativement, ou en plus, au moins une tracklet de référence peut être fournie par le procédé selon l'invention, lors d'une itération précédente du procédé selon l'invention, par mémorisation d'une nouvelle tracklet comme tracklet de référence comme décrit plus loin.

Au moins une tracklet de référence peut être une tracklet obtenue à partir d'un flux vidéo capté et fourni, en temps réel, par une caméra parmi une pluralité de caméras distribuées dans l'espace.
De manière similaire, la, ou chaque, nouvelle tracklet peut être une tracklet générée à partir d'un flux vidéo capté et fourni, en temps réel, par l'une de ladite pluralité de caméras.

Avantageusement, l'étape de filtrage peut comprendre un filtrage spatiotemporel de la nouvelle tracklet en fonction :
- des positions géographiques de la ou des caméras ayant capté les flux vidéo à partir desquelles la tracklet de référence et ladite nouvelle tracklet ont été obtenues,
- des instants d'obtention respectifs desdites tracklets, et
- d'une vitesse de déplacement maximale prédéterminée d'une personne.

Autrement dit, cette étape de filtrage permet de déterminer, s'il est physiquement possible que la personne d'intérêt puisse se trouver dans la nouvelle tracklet.

Pour ce faire, l'étape de filtrage spatiotemporelle détermine la distance entre la position de la caméra, dite de référence, à partir de laquelle la tracklet de référence a été obtenue et la position de la caméra à partir de laquelle la nouvelle tracklet a été obtenue. De plus, la durée écoulée entre la tracklet de référence et la nouvelle tracklet est déterminée. À partir de ces données de distance et de durée, une vitesse de déplacement est calculée et comparée à la vitesse de déplacement maximale prédéterminée :
- si la vitesse calculée est supérieure à la vitesse maximale, alors il est impossible que la personne d'intérêt se trouve dans la nouvelle tracklet : la nouvelle tracklet est éliminée ;
- dans la cas contraire, il est possible que la personne d'intérêt se trouve dans la nouvelle tracklet : la nouvelle tracklet satisfait le filtrage spatiotemporel.

Ainsi, cette étape de filtrage spatiotemporel permet de diminuer automatiquement le nombre de tracklets à analyser, dans la suite du procédé, et augmente l'efficacité de suivi en diminuant le nombre de tracklet remontées à l'opérateur humain.

Avantageusement, pour au moins une tracklet :
- la position géographique de la caméra à partir de laquelle ladite tracklet a été obtenue, et/ou
- l'instant d'obtention de la tracklet ;
peu(ven)t être mémorisé(s) avec ladite tracklet, par exemple au moment de la génération de ladite tracklet.

En particulier, l'instant d'obtention de la tracklet peut correspondre à l'instant de captation, par la caméra, du flux vidéo temps réel à partir duquel la tracklet a été générée.

L'étape de filtrage peut comprendre un filtrage d'attribut visuel basé sur :
- au moins une couleur d'un vêtement de la personne d'intérêt se trouvant dans la tracklet de référence, et
- au moins une couleur d'un vêtement de la personne d'intérêt se trouvant dans la nouvelle tracklet.

Pour ce faire, l'étape de filtrage d'attribut visuel compare une couleur d'un vêtement apparaissant dans la nouvelle tracklet à une couleur d'un vêtement de la personne d'intérêt se trouvant dans la tracklet de référence :
- si les couleurs ne correspondent pas, alors il est impossible que la personne d'intérêt se trouve dans la nouvelle tracklet : la nouvelle tracklet est éliminée ;
- dans la cas contraire, il est possible que la personne d'intérêt se trouve dans la nouvelle tracklet : la nouvelle tracklet satisfait le filtrage d'attribut visuel.

Dans la présente invention, deux couleurs correspondent lorsque la distance entre ces couleurs est inférieure à un seuil prédéterminé, ou lorsque la similitude entre ces couleurs est supérieure à une valeur seuil.

La distance entre deux couleurs peut par exemple être un écart de couleur calculée selon des techniques connues.

En particulier, avant d'être comparée, deux couleurs peuvent être passées dans un espace de couleur, tel que par exemple dans l'espace chromatique CIELAB (https://en.wikipedia.org/wiki/CIELAB_color_space). Puis, un écart de couleur, ou une distance, également appelé delta E, peut être calculé selon des techniques connues, telle que par exemple celle décrite à la page internet https://en.wikipedia.org/wiki/Color_difference#CIEDE2000.

Ainsi, cette étape de filtrage d'attribut(s) visuel(s) permet de diminuer automatiquement le nombre de tracklets à analyser dans la suite du procédé et augmente l'efficacité du suivi en se basant sur la couleur des vêtements des personnes se trouvant sur les tracklets.

Avantageusement, l'étape de filtrage d'attribut visuel peut comparer une unique couleur de vêtement apparaissant dans la nouvelle tracklet à une unique couleur de vêtement apparaissant dans la tracklet de référence.

Alternativement, l'étape de filtrage d'attributs visuel peut réaliser une comparaison de couleur de vêtement pour différentes parties du corps, par exemple :
- une comparaison de couleurs pour le haut du corps, et/ou
- une comparaison de couleurs pour le bas du corps.

Pour au moins une tracklet, la ou chaque couleur d'un vêtement de la personne apparaissant dans ladite tracklet peut être déterminée par analyse d'au moins une image de ladite tracklet, en particulier en utilisant un modèle de deep learning, par exemple un modèle de type « Human Parsing ».

Pour au moins une tracklet, la ou chaque couleur d'un vêtement peut être déterminée au moment de la génération de la tracklet et mémorisée avec ladite tracklet.

Suivant une caractéristique avantageuse, l'étape de validation peut comprendre une validation manuelle de la nouvelle tracklet, par un opérateur humain, lorsque ladite nouvelle tracklet satisfait l'étape d'analyse avec un premier niveau de confiance prédéterminé.

Dans ce cas, la nouvelle tracklet est affichée sur un écran, éventuellement en même temps que la tracklet de référence, et l'opérateur humain réalise une inspection visuelle de la nouvelle tracklet, et en particulier une comparaison visuelle de la personne se trouvant sur la nouvelle tracklet avec la personne d'intérêt se trouvant sur la tracklet de référence. Si l'opérateur conclut visuellement qu'il s'agit de la même personne, il peut valider la nouvelle tracklet. Dans le cas contraire, la nouvelle tracklet n'est pas validée.

Cela permet de ne pas avoir de faux positifs ou faux négatifs, en sollicitant l'opérateur humain, pour un nouvelle tracklet ressemblant à la tracklet de référence.

Alternativement, ou en plus, l'étape de validation peut comprendre une validation automatique de la nouvelle tracklet, lorsque ladite nouvelle tracklet satisfait l'étape d'analyse avec un deuxième niveau de confiance prédéterminé, supérieur audit premier niveau de confiance.

Dans ce cas, on estime que la personne se trouvant sur la nouvelle tracklet est forcément la personne d'intérêt, et la validation est faite sans recours à l'opérateur humain. Cela permet de diminuer le travail de l'opérateur humain en réalisant la validation à sa place.

Chaque niveau de confiance peut être définie avec une ou plusieurs valeurs seuils, chacune relative à une grandeur déterminée lors de l'étape d'analyse.

Par exemple, le premier niveau de confiance peut être défini avec :
- une première valeur seuil relative à la distance calculée entre la signature de la nouvelle tracklet et la signature de la tracklet de référence ; et
- au moins une deuxième valeur seuil relative à la distance calculée entre des couleurs de vêtements lors de l'étape de filtrage d'attributs visuels.
Dans ce cas :
- si la distance entre la signature de référence et la signature de la nouvelle tracklet est inférieure ou égale à la première valeur seuil ; et
- si la, ou chaque, distance obtenue lors de chaque comparaison de couleur pendant l'étape de filtrage d'attributs visuels est inférieure ou égale à la deuxième valeur seuil ;
alors la nouvelle tracklet satisfait l'étape filtrage avec le premier niveau de confiance.

Dans ce cas, la nouvelle tracklet peut être présentée à l'opérateur pour une validation manuelle éventuelle.

De manière similaire, le deuxième niveau de confiance peut être définie avec :
- une troisième valeur seuil relative à la distance calculée entre la signature de la nouvelle tracklet et la signature de la tracklet de référence, inférieure à la première valeur seuil ; et
- au moins une quatrième valeur seuil relative à la distance, calculée entre des couleurs de vêtements lors de l'étape de filtrage d'attributs visuels, inférieure à la deuxième valeur seuil.
Dans ce cas :
- si la distance entre la signature de référence et la signature de la nouvelle tracklet est inférieure ou égale à la troisième valeur seuil ; et
- si la, ou chaque, distance obtenue lors de chaque comparaison de couleur pendant l'étape de filtrage d'attributs visuels est inférieure ou égale à la quatrième valeur seuil ;
alors la nouvelle tracklet satisfait l'étape filtrage avec le deuxième niveau de confiance.

Dans ce cas, la nouvelle tracklet peut être validée de manière automatique.

Le procédé selon l'invention peut comprendre une mémorisation d'une nouvelle tracklet en cas de validation de ladite nouvelle tracklet.

La nouvelle tracklet peut être mémorisée dans une base de données, dédiée ou non au suivi de la personne d'intérêt.

Dans le cas contraire, c'est-à-dire lorsque la nouvelle tracklet n'est pas validée, alors cela indique que la nouvelle tracklet ne correspond pas à la personne d'intérêt. La nouvelle tracklet peut ne pas être mémorisée, ou être mémorisée dans une autre base de données.

Le procédé selon l'invention peut comprendre une mémorisation d'une nouvelle tracklet, comme une tracklet de référence, en cas de validation manuelle de ladite nouvelle tracklet.

Dans ce cas, cette nouvelle tracklet est considérée comme une tracklet de référence pour les prochaines itérations du procédé selon l'invention.

Le procédé selon l'invention peut en comprendre, pour au moins une nouvelle tracklet, une étape de génération de ladite tracklet à partir d'un flux vidéo temps réel fourni par une caméra, ladite étape comprenant les étapes suivantes :
- conversion dudit flux vidéo temps réel, en une pluralité d'images ;
- dans chaque image :
   ▪ détection d'une personne en utilisant un modèle de deep learning, par exemple un modèle de deep learning de type « Human Detector », et
   ▪ pour chaque personne détectée, calcul d'une signature, en utilisant un modèle de deep learning, par exemple un modèle de deep learning de type « Huma ReID » ; et
- extraction d'une séquence d'image(s) correspondant à une même personne, en fonction desdites signatures calculées.

En particulier, une tracklet est composée d'images correspondant à la même personne, c'est-à-dire d'images comportant chacune une personne présentant la même signature de personne, ou des signatures de personne similaires.

Deux signatures de personne sont identiques ou similaires lorsqu'elles présentent une distance, par exemple une distance cosinus, inférieure ou égale à un seuil prédéterminé.

Suivant une alternative, pour éviter de surcharger le modèle de deep-learning utilisé pour la détection de personne, et de conserver l'aspect temps réel, il est possible de ne pas traiter chaque image obtenue suite à l'étape de conversion, par ledit modèle de deep-learning.

Dans ce cas, le modèle de deep learning de détection de personne est utilisé pour traiter une image toutes les N images obtenues à l'étape de conversion. Pour la ou les images intermédiaires entre deux appels au modèle de deep-learning pour la détection de personne, il est possible d'utiliser des trackeurs plus rapide, de type KCF (https://arxiv.org/abs/1404.7584), activés sur chacune des détections retournées par ledit modèle de deep learning utilisé pour la détection de personne.

Suivant un exemple de réalisation nullement limitatif, pour au moins une image, la signature d'une personne dans cette image est calculée en fonction de l'apparence de cette personne dans ladite image. En particulier, cette signature n'est pas construite sur des données biométriques, n'est pas unique et devient obsolète lorsque la personne change de vêtement.

Bien entendu, suivant une alternative, il est possible de calculer la signature de la personne en se basant sur des données biométriques. Dans ce cas, la signature obtenue ne sera pas dépendante de la couleur de vêtement par exemple.

Bien entendu, le procédé selon l'invention peut comprendre une génération de la tracklet de référence de manière similaire ou identique, à partir d'un flux vidéo comprenant la personne de référence.

Le procédé selon l'invention peut comprendre, pour au moins une nouvelle tracklet d'une personne, une étape de détermination de la signature de ladite nouvelle tracklet en fonction des signatures calculées pour cette personne sur chacune des images formant ladite nouvelle tracklet.

La signature de la tracklet peut être obtenue par toute relation prenant en compte ces signatures. En particulier, la signature de la nouvelle tracklet peut être une moyenne de toutes ces signatures.

Bien entendu, le procédé selon l'invention peut comprendre une détermination de la signature de la tracklet de référence de manière similaire ou identique.

Avantageusement, le procédé selon l'invention peut comprendre, pour au moins une nouvelle tracklet, une étape détection d'au moins une couleur d'un vêtement de la personne se trouvant dans ladite nouvelle tracklet en utilisant un modèle de deep learning, par exemple un modèle de deep learning de type « Human Parsing ».

Bien entendu, le procédé selon l'invention peut comprendre une étape de détection d'au moins une couleur d'un vêtement de la personne dans la tracklet de référence, de manière similaire ou identique.

Suivant un mode de réalisation particulier, la distance déterminée entre les signatures de deux tracklet, et en particulier entre la signature de la tracklet de référence et une nouvelle tracklet, peut être la distance cosinus.

De manière équivalente, au lieu d'utiliser une distance, le procédé selon l'invention peut être mise en œuvre avec une similarité telle que par exemple la similarité cosinus.

Bien entendu, il est possible d'utiliser d'autre distances, telles que par exemple la distance euclidienne, une distance de corrélation, etc.

Bien entendu, le procédé selon l'invention peut être utilisé pour l'assistance au suivi en temps réel et simultanée de plusieurs personnes d'intérêt.

Dans ce cas, le procédé selon l'invention est exécuté individuellement, pour chaque personne d'intérêt, en parallèle.

Ainsi, il est possible d'avoir plusieurs instances du procédé selon l'invention qui sont exécutées en parallèle, chacune pour une personne d'intérêt. Pour ce faire, une tracklet de référence est sélectionnée et fournie au procédé selon l'invention pour chaque personne d'intérêt et les étapes du procédé selon l'invention, et en particulier l'étape d'analyse, sont réalisées pour chaque tracklet de référence.

Suivant un autre aspect de la présente invention, il est proposé un programme d'ordinateur comprenant des instructions, qui lorsqu'elles sont exécutées par un appareil de traitement de données, mettent en œuvre toutes les étapes du procédé d'assistance au suivi en temps réel d'au moins une personne d'intérêt, selon l'invention.

Le programme d'ordinateur peut être codé dans tout langage informatique adéquat, par exemple en C, C++, JAVA, Python, etc.

Suivant un autre aspect de la présente invention, il est proposé un support d'enregistrement lisible par un appareil de traitement de données comprenant des instructions, qui lorsqu'elles sont exécutées par ledit appareil de traitement de données, mettent en œuvre toutes les étapes du procédé d'assistance au suivi en temps réel d'au moins une personne d'intérêt, selon l'invention.

Le support d'enregistrement peut être tout type de support qui peut être lu par un dispositif de traitement de données. Par exemple, le support d'enregistrement peut être une clef USB, un disque dur, une mémoire flash, un serveur, un CD-ROM, etc.

Les instructions peuvent être mémorisées dans le support d'enregistrement en code source ou en langage machine.

Suivant un autre aspect de la même invention, il est proposé un dispositif d'assistance au suivi, en temps réel, d'au moins une personne d'intérêt, comprenant au moins une unité de traitement configurée pour mettre en œuvre toutes les étapes du procédé d'assistance au suivi en temps réel d'au moins une personne d'intérêt selon l'invention.

Le dispositif selon l'invention peut être un ordinateur, un serveur, ou tout autre appareil informatique, ou de traitement de données, capable d'exécuter des instructions informatiques et de traiter des images.

Le dispositif selon l'invention peut être un appareil localisé, ou peut être distribué, par exemple dans le cloud.

La, ou chaque, unité de traitement peut être ou comprendre au moins un processeur, au moins un calculateur, au moins une puce informatique programmable, etc. En particulier, l'au moins une unité de traitement peut être formé par un ou processeur, ou plusieurs processeurs, ou de ressources de calcul, distribués.

Le dispositif selon l'invention peut comprendre au moins un écran d'affichage pour y afficher au moins une nouvelle tracklet, et éventuellement au moins une tracklet de référence, pour qu'un opérateur humain puisse réaliser une inspection visuelle de ladite nouvelle tracklet, en vue de valider ou non ladite nouvelle tracklet.

Le dispositif selon l'invention peut en outre comprendre des moyens de mémorisation d'au moins une tracklet.

En particulier, le dispositif selon l'invention peut comprendre une base de données dans laquelle est enregistrée une nouvelle tracklet lorsqu'elle est validée par l'opérateur humain comme correspondant à la personne d'intérêt.

Suivant un autre aspect de la présente invention, il est proposé un procédé de suivi, en temps réel, d'au moins une personne d'intérêt, par une pluralité de caméras distribuées dans l'espace, ledit procédé comprenant, pour chaque personne d'intérêt, les étapes suivantes :
- captation, par l'une desdites caméras d'un flux vidéo dans laquelle se trouve ladite personne d'intérêt, et à partir duquel est générée une tracklet de ladite personne d'intérêt,
- captation, par au moins une desdites caméras, d'au moins un flux vidéo en temps réel à partir duquel est générée au moins nouvelle tracklet, postérieure à la tracklet de ladite personne d'intérêt, et
- traitement d'au moins une desdites nouvelles tracklets par le procédé d'assistance au suivi en temps réel selon l'invention, dans lequel ladite tracklet de ladite personne d'intérêt est sélectionnée comme tracklet de référence.

Suivant un autre aspect de la présente invention, il est proposé une installation de suivi, en temps réel, d'au moins une personne d'intérêt comprenant :
- plusieurs caméras distribuées dans l'espace pour capter et fournir des flux vidéo en temps réel, et
- au moins un dispositif de traitement de données ;
configurés pour mettre en œuvre le procédé de suivi en temps réel d'au moins une personne d'intérêt selon l'invention.

Le dispositif de traitement de données peut être disposé sur un site distant des caméras de captation.

Le dispositif de traitement de données peut être en communication avec chacune des caméras de captation par une liaison filaire ou sans fil.

Selon l'invention, au moins une caméra peut fournir un flux vidéo en temps réel en tout format, par exemple un flux vidéo en temps réel au format RTSP.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé d'assistance au suivi en temps réel d'au moins une personne d'intérêt selon l'invention ;
- la FIGURE 2 est une représentation schématique d'une étape de génération d'une tracklet à partir d'un flux vidéo, pouvant être mise en œuvre dans la présente invention ;
- la FIGURE 3 est une représentation schématique d'un exemple de réalisation non limitatif d'un dispositif d'assistance au suivi, en temps réel, d'au moins une personne d'intérêt selon l'invention ;
- la FIGURE 4 est une représentation schématique d'un exemple de réalisation non limitatif d'une installation de suivi, en temps réel, d'au moins une personne d'intérêt, selon l'invention ; et
- la FIGURE 5 est une représentation schématique d'un exemple de réalisation non limitatif d'un procédé de suivi, en temps réel, d'au moins une personne d'intérêt, selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

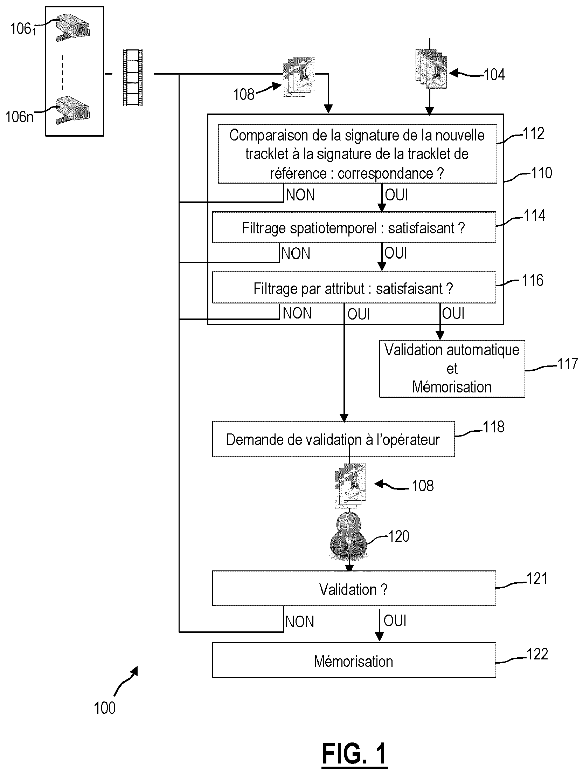

La FIGURE 1 est une représentation schématique d'un exemple de réalisation non limitatif d'un procédé d'assistance au suivi en temps réel d'une personne d'intérêt.

Le procédé 100, représenté sur la FIGURE 1, est réalisé à partir d'une ou plusieurs tracklets de référence 104 correspondant(s) à la personne d'intérêt. Pour plus de simplicité, dans cet exemple, on considère qu'il y a une seule tracklet de référence 104.

Bien entendu, s'il y a plusieurs tracklets de référence 104, les étapes du procédé sont réalisées pour chaque tracklet de référence 104 individuellement.

La tracklet de référence 104 a été générée à partir d'un flux vidéo captée par une caméra, appelée caméra de référence dans la suite, parmi une pluralité de caméras 106₁-106ₙ, distribuées dans l'espace. La tracklet de référence 104 est formée par une séquence d'images représentant ladite personne d'intérêt, immobile ou mobile, dans le champ de vision de la caméra de référence. Un exemple de génération d'une tracklet à partir d'un flux vidéo sera décrit plus loin.

La tracklet de référence 104 est mémorisée dans une base de données en association avec :
- une signature numérique de ladite tracklet de référence ;
- une donnée GPS de localisation de la caméra de référence ;
- une donnée indiquant l'instant de prise de la tracklet de référence 104, et en particulier du flux vidéo à partir duquel la tracklet de référence a été générée, par exemple une heure de début correspondant à l'heure de l'image de début de la tracklet et une heure de fin correspondant à l'heure de l'image de fin formant la tracklet ;
- une ou plusieurs données de couleur indiquant la couleur d'un ou de plusieurs vêtements portés par la personne d'intérêt sur les images formant la tracklet de référence 104 ; et
- éventuellement, une donnée relative à la position de la personne d'intérêt dans la vidéo prise par la caméra de référence.

De plus, la tracklet de référence 104 est mémorisée avec une signature numérique de ladite tracklet. Un exemple de détermination d'une signature numérique sera décrit plus bas.

A partir du moment où la tracklet de référence 104 a été sélectionnée, chaque nouvelle tracklet 108 obtenue, en temps réel, à partir des flux vidéo fournis par l'une quelconque des caméras de captation 106₁-106ₙ est analysée, en temps réel, par le procédé selon l'invention lors d'une étape d'analyse 110.

Tout comme la tracklet de référence 104, chaque nouvelle tracklet 108 est associée à :
- une signature numérique de ladite nouvelle tracklet 108
- une donnée GPS de localisation de la caméra 106ᵢ ayant fourni le flux vidéo en temps réel à partir duquel la nouvelle tracklet 108 a été générée ;
- une donnée indiquant l'instant de prise de la nouvelle tracklet 108, et en particulier du flux vidéo temps réel à partir duquel la nouvelle tracklet 108 a été générée, par exemple une heure de début correspondant à l'heure de l'image de début de la nouvelle tracklet et une heure de fin correspondant à l'heure de l'image de fin formant la nouvelle tracklet ;
- une ou plusieurs données de couleur indiquant la couleur d'un ou de plusieurs vêtements portés par la personne se trouvant sur les images formant la nouvelle tracklet 108 ; et
- éventuellement, une donnée relative à la position de la personne d'intérêt dans la vidéo prise par la caméra de référence.

La nouvelle tracklet 108 et la tracklet de référence 104 sont données en entrée d'une étape d'analyse 110 du procédé 100.

Cette étape d'analyse 110 est réalisée individuellement pour chaque nouvelle tracklet 108 générée à partir du flux vidéo en temps réel fourni par chacune des caméras de captation 106₁-106ₙ.

L'étape d'analyse 110 comprend une étape 112 de comparaison des signatures respectives de la tracklet de référence 104 et de la nouvelle tracklet 108. Pour ce faire, cette étape 112 calcule la distance cosinus entre lesdites signatures.

Si la distance est supérieure à un premier seuil prédéterminé, alors les deux signatures ne se correspondent pas. Dans ce cas, l'étape d'analyse 110 est terminée et une nouvelle tracklet peut être analysée.

Si la distance est inférieure au premier seuil prédéterminé, alors on estime qu'il existe une probabilité de suffisante que la nouvelle tracklet 108 corresponde à la personne d'intérêt, avec un premier niveau de confiance.

Si la distance est inférieure à un deuxième seuil prédéterminé, inférieur au premier seuil prédéterminé, alors on estime qu'il existe une probabilité de suffisante que la nouvelle tracklet 108 corresponde à la personne d'intérêt, avec un deuxième niveau de confiance, plus haut que le premier niveau de confiance.

L'étape d'analyse 110 comprend une étape 114 de filtrage spatiotemporel. Lors de cette étape de filtrage spatiotemporel 114, on détermine si la personne d'intérêt a eu le temps de se déplacer depuis l'emplacement de prise de la tracklet de référence 104 jusqu'à l'emplacement de prise de la nouvelle tracklet 108, pendant la durée séparant lesdites tracklets.

Pour ce faire, la distance séparant le lieu de prise de la tracklet de référence 104 du lieu de prise de la nouvelle tracklet 108 est calculée en fonction des données GPS associées auxdites tracklets. De plus, la durée séparant l'instant de prise de la tracklet de référence 104 de l'instant de prise de la nouvelle tracklet 108 est calculée en fonction des données horaires associées auxdites tracklets.

Une vitesse de déplacement est calculée en fonction de ladite distance et de ladite durée calculées. La vitesse ainsi calculée est comparée à une vitesse maximale prédéterminée.

Si la vitesse calculée est supérieure à la vitesse maximale, cela indique que la nouvelle tracklet 108 ne peut pas correspondre à la personne d'intérêt, ce dernier n'ayant pas eu le temps de se déplacer jusqu'au lieu de prise de la nouvelle tracklet 108. Dans ce cas, l'étape d'analyse 110 est terminée et une nouvelle tracklet peut être analysée.

Dans le cas contraire, on estime qu'il existe une probabilité suffisante pour que la nouvelle tracklet 108 corresponde à la personne d'intérêt.

L'étape d'analyse 110 comprend en outre une étape 116 de filtrage par attribut. Lors de cette étape de filtrage par attribut 116, on détermine si la personne de la nouvelle tracklet 108 présente les mêmes attributs que la personne d'intérêt de la tracklet de référence 104.

Pour ce faire, au moins un attribut visuel de la personne de la nouvelle tracklet 108 est comparée à au moins un attribut visuel de la personne d'intérêt de la tracklet de référence 104.

En particulier, dans cet exemple, l'étape 116 compare :
- la couleur du vêtement du haut du corps de la personne d'intérêt de la tracklet de référence 104 à la couleur du vêtement du haut du corps de la personne de la nouvelle tracklet 108, et
- la couleur du vêtement du bas du corps de la personne d'intérêt de la tracklet de référence 104 à la couleur du vêtement du bas du corps de la personne de la nouvelle tracklet 108.

Deux couleurs sont comparées entre-elles en calculant la distance, par exemple la distance colorimétrique, entre les données représentant ces deux couleurs.

Si la distance colorimétrique est supérieure à un premier seuil prédéterminé de distance colorimétrique, alors les deux tracklets ne se correspondent pas. Dans ce cas, l'étape d'analyse 110 est terminée et une nouvelle tracklet peut être analysée.

Si la distance colorimétrique est inférieure au premier seuil prédéterminé de distance colorimétrique, alors on estime qu'il existe une probabilité suffisante que la nouvelle tracklet 108 corresponde à la personne d'intérêt, avec le premier niveau de confiance.

Si la distance colorimétrique est inférieure à un deuxième seuil prédéterminé de distance colorimétrique, inférieur au premier seuil prédéterminé de distance colorimétrique, alors on estime qu'il existe une probabilité suffisante que la nouvelle tracklet 108 corresponde à la personne d'intérêt, avec le deuxième niveau de confiance.

Lorsque la nouvelle tracklet 108 satisfait l'ensemble des étapes 112-116, avec le deuxième niveau de confiance, plus élevé que le premier niveau de confiance, alors le procédé 100 comprend une étape 117 de validation automatique de la nouvelle tracklet 108 comme correspondant à la personne d'intérêt et une mémorisation de la nouvelle tracklet 108 en association avec la personne d'intérêt.

Lorsque la nouvelle tracklet 108 satisfait l'ensemble des étapes 112-116, avec le premier niveau de confiance, moins élevé que le deuxième niveau de confiance, alors le procédé 100 réalise une validation manuelle, ou non, de la nouvelle tracklet.

Pour ce faire, le procédé 100 comprend une étape 118 de demande de validation à un opérateur humain 120. Lors de cette étape 118, la nouvelle tracklet 108 est affichée sur un écran d'affichage, éventuellement avec la tracklet de référence 104, de sorte que l'opérateur humain 120 peut visuellement analyser la nouvelle tracklet 108, voire comparer la nouvelle tracklet 108 à la tracklet de référence 104.

Si, lors d'une étape 121, l'opérateur humain 120 ne confirme pas que la nouvelle tracklet 108 correspond à la personne d'intérêt, alors la nouvelle tracklet 108 est ignorée. L'étape d'analyse 100 peut être réalisée pour une nouvelle tracklet.

Dans le cas contraire, c'est-à-dire si, lors de l'étape 121, l'opérateur humain 120 confirme que la nouvelle tracklet 108 correspond à la personne d'intérêt, alors la nouvelle tracklet 108 peut être mémorisée lors d'une étape 112, comme tracklet de référence. Cette nouvelle tracklet 108 sera utilisée comme tracklet de référence pour les nouvelles itérations du procédé selon l'invention, à la place ou en plus de la tracklet de référence 104.

Bien entendu, l'invention n'est pas limitée à l'exemple donné en FIGURE 1.

Par, exemple les étapes 112-116 peuvent être réalisées dans un autre ordre que celui décrit ici, ou seule une partie de ces étapes peut être réalisée.

De plus, le procédé selon l'invention peut comprendre d'autres étapes que celles décrites, telles qu'une étape de détermination de la trajectoire en temps réel de la personne d'intérêt en fonction des positions GPS associées à chaque nouveau tracklet détectée comme correspondant à la personne d'intérêt.

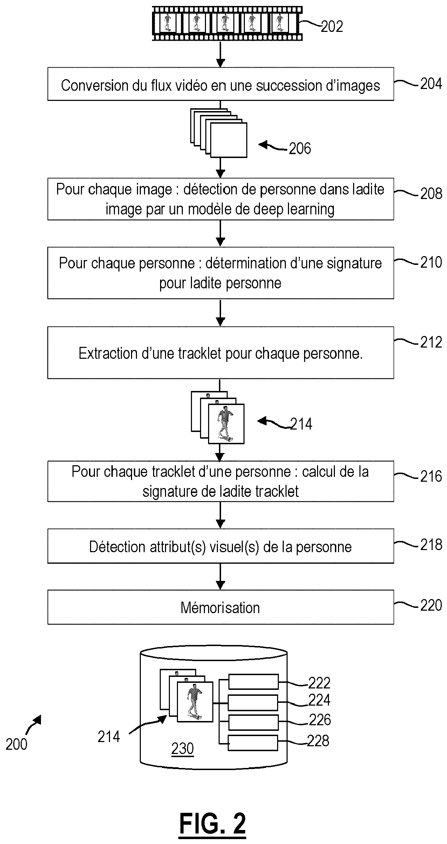

La FIGURE 2 est une représentation schématique d'une étape de génération d'une tracklet à partir de d'un flux vidéo, pouvant être mise en œuvre dans la présente invention.

L'étape 200, représentée sur la FIGURE 2, permet de générer une tracklet, c'est-à-dire une séquence d'images comprenant une personne, à partir d'un flux vidéo 202 qui peut être un flux vidéo en temps réel, tel que par exemple un flux vidéo RTSP.

L'étape 200 peut être utilisée pour générer une tracklet en temps réel, ou à la volée, c'est-à-dire dès réception d'un flux vidéo, ou de manière continue, ou encore au fur et à mesure de la réception d'un flux vidéo, par exemple depuis une caméra de surveillance.

Lors d'une étape 204, le flux vidéo 202 est transformé en une succession d'images 206. Cette étape 204 de transformation peut être réalisée par toute technique connue sachant qu'un flux vidéo est, en soi, une succession d'images.

Ensuite, lors d'une étape 208, chaque image 206 obtenue l'étape 204 est traitée pour y détecter une ou plusieurs personnes, en utilisant un modèle de deep learning. Par exemple, la détection d'une personne dans une image peut être réalisée en utilisant le modèle « Human Detector ». À l'étape 208, une image qui ne comprend pas de personne est éliminée. Lorsqu'une personne est détectée dans une image, celle-ci est conservée.

Lors d'une étape 210, une signature numérique est calculée pour chaque personne détectée dans une image 206, et ceux pour toutes les images 206 contenant au moins une personne. Ainsi, lorsqu'une image 206 comprend deux personnes, deux signatures sont déterminées pour cette image : une pour chaque personne. La signature d'une personne peut être déterminée en utilisant un modèle de deep learning. Par exemple, la signature d'une personne sur une image 206 peut être déterminée en utilisant le modèle « Human ReID ».

Ensuite, lors d'une étape 212, toutes les images contenant la même signature de personne, ou des signatures de personne similaires, sont extraites pour former une tracklet pour cette personne. On rappelle que deux signatures de personne sont identiques, ou similaires, lorsque la distance entre ces deux signatures, par exemple la distance cosinus, est inférieure ou égale à une valeur prédéterminée. Ainsi, lors de l'étape 212, il est possible d'avoir une seule tracklet lorsque le flux vidéo montre qu'une seule personne, et plusieurs tracklets correspondant chacune une personne lorsque le flux vidéo montre plusieurs personnes. Dans la suite, on considère que le flux vidéo ne montre qu'une seule personne et qu'une seule tracklet 214 est obtenue à l'étape 212.

Lors d'une étape 216, une signature est déterminée pour la tracklet 214 correspondant à une personne, en fonction de la signature de cette personne dans chacune des images composant ladite tracklet 214. La signature de la tracklet peut être déterminée en calculant une moyenne de toutes les signatures de la personne pour l'ensemble des images composant la tracklet, ou par toute autre relation prenant en compte ces signatures.

Lors d'une étape 218, pour une tracklet d'une personne, au moins un attribut visuel de la personne est détecté. Un tel attribut peut par exemple être une couleur de vêtement haut, une couleur de vêtement bas, une couleur d'un objet porté par la personne, un type de vêtement, etc ou tout autre attribut visuel. La détection d'au moins un attribut visuel peut être réalisée en utilisant un modèle de deep learning. Par exemple, la détection d'au moins un attribut visuel peut être réalisée en utilisant le modèle « Human Parsing ». Dans ce cas, chaque attribut visuel est représenté par une signature fournie par le modèle utilisé. Dans le cas où l'attribut est une couleur, celui-ci est représenté par une donnée numérique dans l'espace de couleur RGB.

Optionnellement, lors d'une étape 220, la tracklet 214, sa signature 222, l'au moins un attribut visuel 224, ainsi qu'une donnée horaire 226 représentant l'instant de prise du flux vidéo 202, et une donnée GPS 228 représentant la localisation de la caméra ayant acquis le flux vidéo 202 sont mémorisées dans une base de données 230.

Par exemple, les données horaires et GPS peuvent être extraite du flux vidéo 202 par exemple, ou fournie en association avec ledit flux vidéo 202.

L'étape 200 de génération d'une tracklet peut être utilisée pour générer la tracklet de référence 104, ou chaque nouvelle tracklet 108 de la FIGURE 1. En particulier, l'étape 200 de génération d'une tracklet peut être utilisée pour générer en temps réel et à la volée des tracklets à partir de flux vidéo captées et fournie en temps réel par une ou plusieurs caméras.

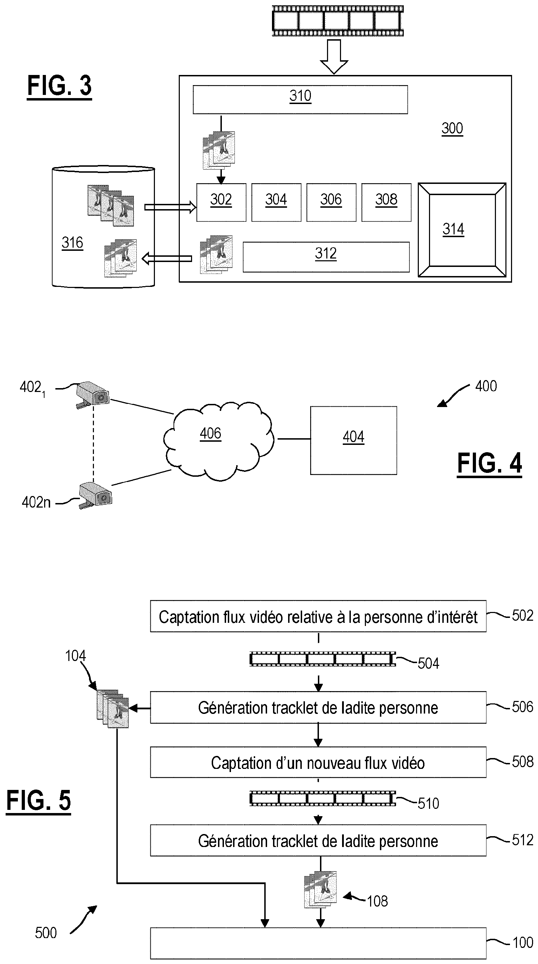

La FIGURE 3 est une représentation schématique d'un exemple de réalisation non limitatif d'un dispositif d'assistance au suivi, en temps réel, d'une personne d'intérêt, selon l'invention.

Le dispositif 300 de la FIGURE 3 peut être utilisé pour mettre en œuvre le procédé 100 de la FIGURE 1, et plus généralement un procédé d'assistance au suivi en temps réel d'une personne d'intérêt selon l'invention.

Le dispositif 300 comprend une ou plusieurs unités de traitement de données configurées pour mettre en œuvre toutes les étapes du procédé selon l'invention.

En particulier, le dispositif 300 comprend une unité de traitement 302 permettant de sélectionner ou de mettre à jour une tracklet de référence, ou une liste de tracklet de référence, par exemple depuis une base de données ou à partir d'une nouvelle tracklet validée par un opérateur humain.

Le dispositif 300 comprend en outre une unité de traitement 304 configurée pour calculer une distance, en particulier la distance cosinus, entre les signatures de deux tracklets données en entrée de ladite unité de traitement 304, et en particulier la distance entre la signature de la tracklet de référence et la signature d'une nouvelle tracklet.

Le dispositif 300 comprend en outre une unité de traitement 306 configurée pour réaliser un filtrage spatiotemporel d'une tracklet, et en particulier d'une nouvelle tracklet en fonction de données relatives à la tracklet de référence, tel que décrit plus haut.

Le dispositif 300 comprend en outre une unité de traitement 308 configurée pour réaliser un filtrage par attribut d'une tracklet, et en particulier d'une nouvelle tracklet en fonction d'au moins un attribut de la tracklet de référence, tel que décrit plus haut.

De manière optionnelle, le dispositif 300 peut en outre comprendre une unité de traitement 310 permettant de générer, à partir d'un flux vidéo, au moins une tracklet, ainsi que des paramètres relatifs à ladite tracklet, tels que par exemple la signature de ladite tracklet, une donnée horaire, une donnée GPS, au moins une donnée d'attribut visuel, etc. De manière nullement limitative, cette unité de traitement 310 peut en particulier être configurée pour mettre en œuvre l'étape 200 décrite en référence à la FIGURE 2.

De manière optionnelle, le dispositif 300 peut en outre comprendre une unité de traitement 312 permettant mémoriser dans une base de données une nouvelle tracklet lorsqu'elle est validée par l'opérateur.

Le dispositif 300 comprend en outre un écran d'affichage 314 pour afficher une tracklet pour une inspection visuelle de ladite tracklet par un opérateur humain, et un moyen d'entrée de donnée pour un opérateur humain permettant de confirmer ou non qu'une nouvelle tracklet correspond à une tracklet de référence. Un tel moyen d'entrée peut être une interface tactile intégrée dans l'écran d'affichage, un clavier, une souris, etc.

Chacune des unités de traitement de données 302-310 peut être individuelle et indépendante des autres unités de traitement.

Au moins deux des unités de traitement de données 302-310 peuvent être intégrées au sein d'une même unité de traitement.

Au moins une unité de traitement peut être un calculateur, un processeur, une puce programmable, etc.

Bien entendu, le dispositif 300 peut comprendre d'autre organes, que ceux décrits. Par exemple, le dispositif 300 peut comprendre une base de données 316, intégrée ou non au dispositif de traitement de données 300, pour mémoriser au moins une tracklet.

La FIGURE 4 est une représentation schématique d'un exemple de réalisation non limitatif d'une installation de suivi, en temps réel, d'une personne d'intérêt.

L'installation 400, représentée sur la FIGURE 4, comprend une pluralité de caméras 402₁-402ₙ, telles que des caméras de vidéosurveillance. Par exemple, les caméras 402₁-402ₙ peuvent être les caméras 106₁-106ₙ de la FIGURE 1.

L'installation 400 comprend en outre un dispositif de traitement de données 404, en communication avec les caméras 106₁-106ₙ, pour recevoir, en temps réel, des flux vidéos captés par lesdites caméras 106₁-106ₙ et les traiter. Plus précisément, le dispositif de traitement de données 404 peut être configuré pour extraire une ou plusieurs nouvelles tracklets des flux vidéos fournis par les caméras 402₁-402ₙ et mettre en œuvre le procédé d'assistance au suivi, en temps réel, selon l'invention et en particulier le procédé 100 de la FIGURE 1.

Par exemple, le dispositif de traitement de données 404 peut être le dispositif 300 de la FIGURE 3.

Les caméras 402₁-402ₙ peuvent être en communication avec le dispositif de traitement de données 404 par une connexion filaire, ou sans fil, au travers d'un réseau de communication 406.

La FIGURE 5 est une représentation schématique d'un exemple de réalisation non limitatif d'un procédé de suivi, en temps réel, d'une personne d'intérêt, selon l'invention.

Le procédé 500 de la FIGURE 5 peut être utilisé pour suivre, en temps réelle, au moins une personne d'intérêt, par une pluralité de caméras distribuées dans l'espace, telles que par exemple les caméras 106₁-106ₙ de la FIGURE 1 ou les caméras 402₁-402ₙ de la FIGURE 4.

Le procédé 500 comprend une première étape 502 lors de laquelle est capté un flux vidéo 504 dans lequel apparait ladite personne d'intérêt. Ce flux vidéo peut être capté par l'une quelconque des caméras distribuées dans l'espace.

Lors d'une étape 506, une tracklet de ladite personne d'intérêt est générée à partir dudit flux vidéo 504. Cette tracklet sera utilisée comme tracklet de référence dans la suite du procédé 500. La tracklet générée lors de l'étape 506 peut être mémorisée dans une base de données.

En particulier, la tracklet générée lors de l'étape 506 peut être la tracklet de référence 104 de la FIGURE 1.

L'étape 506 peut par exemple être identique à l'étape 200 de la FIGURE 2.

Le procédé 500 comprend ensuite au moins une itération d'une étape 508 de captation, par l'une quelconque des caméras, d'un nouveau flux vidéo 510. Ce nouveau flux vidéo 510 est capté postérieurement au flux vidéo 504 puisque le procédé 500 permet de réaliser un suivi en temps réel de la personne d'intérêt.

Lors d'une étape 512, une nouvelle tracklet est générée à partir dudit nouveau flux vidéo 510. Cette nouvelle tracklet peut optionnellement être mémorisée dans une base de données. L'étape 512 peut être identique à l'étape 506, et en particulier être identique à l'étape 200 de la FIGURE 2.

En particulier, la tracklet générée lors de ladite étape 512 peut être la nouvelle tracklet 108 de la FIGURE 1.

Le procédé 500 comprend ensuite toutes les étapes du procédé 100 de la FIGURE 1 dans lequel la tracklet de la personne d'intérêt générée à l'étape 506 est entrée comme tracklet de référence 104 et chaque nouvelle tracklet générée à l'étape 512 est entrée comme nouvelle tracklet 108.

Les étapes 508, 512 et 100 peuvent être réitérées autant de fois que souhaitées, et pendant toute la durée du suivi en temps réel de la personne d'intérêt continue.

Bien entendu, l'invention n'est pas limitée aux exemples détaillés ci-dessus.

## Revendications

1. Procédé (100) d'assistance au suivi, en temps réel, d'une personne d'intérêt, mis en œuvre par ordinateur, à partir d'au moins une séquence d'images (104) de ladite personne d'intérêt, dite tracklet de référence, ledit procédé (100) comprenant au moins une itération des étapes suivantes :
- obtention, en temps réel, d'au moins une nouvelle séquence d'images (108), dite nouvelle tracklet, relative à une personne ;
- analyse de ladite nouvelle tracklet (108), comprenant les étapes suivantes réalisées pour au moins une tracklet de référence :
- calcul (112) d'une distance entre une signature de ladite tracklet de référence (104) et une signature de ladite nouvelle tracklet (108),
- lorsque ladite distance est inférieure ou égale à au moins un seuil prédéterminé, filtrage (114,116) automatisé de ladite nouvelle tracklet (108) avec au moins un paramètre relatif à ladite tracklet de référence (104), et
- lorsque ladite nouvelle tracklet (108) satisfait ladite étape d'analyse (114,116), validation ou non (117,118,121) de ladite nouvelle tracklet (108) comme appartenant à ladite personne d'intérêt.

2. Procédé (100) selon la revendication précédente, **caractérisé en ce que** l'étape de filtrage comprend un filtrage spatiotemporel (114) de la nouvelle tracklet (108) en fonction :
- des positions géographiques de la ou des caméras ayant capté les flux vidéo à partir desquelles la tracklet de référence (104) et ladite nouvelle tracklet (108) ont été obtenues,
- des instants d'obtention respectifs desdites tracklets (104,108), et
- d'une vitesse de déplacement maximale prédéterminée d'une personne.

3. Procédé (100) selon l'une quelconque des revendications précédentes, **caractérisé en ce que** l'étape de filtrage comprend un filtrage (116) d'attribut visuel basé sur :
- au moins une couleur d'un vêtement de la personne d'intérêt se trouvant dans la tracklet de référence (104), et
- au moins une couleur d'un vêtement de la personne d'intérêt se trouvant dans la nouvelle tracklet (108).

4. Procédé (100) selon l'une quelconque des revendications précédentes, **caractérisé en ce que** l'étape de validation (117,118,121) comprend :
- une validation manuelle (121) de la nouvelle tracklet, par un opérateur humain, lorsque ladite nouvelle tracklet satisfait l'étape d'analyse avec un résultat satisfaisant un premier niveau de confiance prédéterminé ; et/ou
- une validation automatique (117) de la nouvelle tracklet, lorsque ladite nouvelle tracklet satisfait l'étape d'analyse avec un résultat satisfaisant un deuxième niveau de confiance prédéterminée, supérieur audit premier niveau de confiance.

5. Procédé (100) selon l'une quelconque des revendications précédentes, **caractérisé en ce qu'**il comprend une mémorisation (117,122) d'une nouvelle tracklet (108), en cas de validation de ladite nouvelle tracklet.

6. Procédé (100) selon l'une quelconque des revendications 4 et 5, **caractérisé en ce qu'**il comprend une mémorisation (122) d'une nouvelle tracklet (108), comme une tracklet de référence, en cas de validation manuelle (121) de ladite nouvelle tracklet.

7. Procédé (100) selon l'une quelconque des revendications précédentes, **caractérisé en ce qu'**il comprend, pour au moins une nouvelle tracklet (108), une étape (200,512) de génération de ladite nouvelle tracklet (108) à partir d'un flux vidéo temps réel (510) fourni par une caméra, ladite étape (200,512) comprenant les étapes suivantes :
- conversion (204) dudit flux vidéo temps réel, en une pluralité d'images (206) ;
- dans chaque image (206) :
▪détection (208) d'une personne en utilisant un modèle de deep learning, et
▪ pour chaque personne détectée, calcul (210) d'une signature en utilisant un modèle de deep learning ; et
- extraction (212) d'une séquence d'image(s) correspondant à une même personne, en fonction desdites signatures calculées.

8. Procédé (100) selon l'une quelconque des revendications précédentes, **caractérisé en ce qu'**il comprend, pour au moins une nouvelle tracklet (108) d'une personne, une étape (216) de détermination de la signature de ladite nouvelle tracklet en fonction des signatures calculées pour cette personne sur chacune des images formant ladite nouvelle tracklet (108).

9. Procédé (100) selon l'une quelconque des revendications précédentes, **caractérisé en ce qu'**il comprend, pour au moins une nouvelle tracklet (108), une étape (218) détection d'au moins une couleur d'un vêtement de la personne se trouvant dans ladite nouvelle tracklet (108) en utilisant un modèle de deep learning.

10. Procédé (100) selon l'une quelconque des revendications précédentes, **caractérisé en ce que** la distance déterminée entre les signatures de deux tracklets est la distance cosinus.

11. Procédé (100) selon l'une quelconque des revendications précédentes, **caractérisé en ce qu'**il est mis en œuvre pour le suivi en temps réel et simultanés de plusieurs personnes d'intérêt.

12. Programme d'ordinateur comprenant des instructions, qui lorsqu'elles sont exécutées par un appareil de traitement de données, mettent en œuvre toutes les étapes du procédé (100) d'assistance au suivi en temps réel d'au moins une personne d'intérêt selon l'une quelconque des revendications précédentes.

13. Support d'enregistrement lisible par un appareil de traitement de données comprenant des instructions, qui lorsqu'elles sont exécutées par ledit appareil de traitement de données, mettent en œuvre toutes les étapes du procédé (100) d'assistance au suivi en temps réel d'au moins une personne d'intérêt, selon l'une quelconque des revendications 1 à 11.

14. Dispositif (300) d'assistance au suivi, en temps réel, d'au moins une personne d'intérêt, comprenant au moins une unité de traitement (302-312) configurée pour mettre en œuvre toutes les étapes du procédé (100) d'assistance au suivi en temps réel d'au moins une personne d'intérêt selon l'une quelconque des revendications 1 à 11.

15. Procédé (500) de suivi, en temps réel, d'au moins une personne d'intérêt, par une pluralité de caméras distribuées dans l'espace, ledit procédé comprenant, pour chaque personne d'intérêt, les étapes suivantes :
- captation (502), par l'une desdites caméras d'un flux vidéo (504) dans laquelle se trouve ladite personne d'intérêt, et à partir duquel est générée une tracklet (104) de ladite personne ;
- captation (508), par au moins une desdites caméras, d'au moins un flux vidéo en temps réel (510) à partir duquel est générée au moins nouvelle tracklet (108), postérieure à ladite tracklet (104) de ladite personne d'intérêt ; et
- traitement d'au moins une desdites nouvelles tracklets (108) par le procédé (100) d'assistance au suivi en temps réel selon l'une quelconque des revendications 1 à 11, dans lequel ladite tracklet de ladite personne est sélectionnée comme tracklet de référence.

16. Installation (400) de suivi, en temps réel, d'au moins une personne d'intérêt comprenant :
- plusieurs caméras (402_{1_}402ₙ) distribuées dans l'espace pour capter et fournir des flux vidéo en temps réel, et
- au moins un dispositif de traitement de données ;
configurés pour mettre en œuvre le procédé (500) de suivi en temps réel d'au moins une personne d'intérêt selon la revendication 15.
